# EUROPEAN PATENT SPECIFICATION

(11) **EP 3 524 371 B1**
(45) Date of publication and mention of the grant of the patent: **21.04.2021**
(21) Application number: 18382075.2
(22) Date of filing: 12.02.2018
(51) Int. Cl.: B21K 27/04, B21D 43/10

(54) **SYSTEM AND METHOD FOR TRANSPORTING WORKPIECES IN FORMING MACHINES**
SYSTEM UND VERFAHREN ZUM TRANSPORT VON WERKSTÜCKEN IN FORMGEBUNGSMASCHINEN
SYSTÈME ET PROCÉDÉ DE TRANSPORT DE PIÈCES À USINER DANS DES MACHINES DE FORMAGE

(43) Date of publication of application: 14.08.2019
(73) Proprietor: FAGOR ARRASATE, S.COOP., 20500 ARRASATE - MONDRAGON (ES)
(72) Inventor: MURGOITIO LIZUNDIA, Joseba, 48220 ABADIÑO (ES); ARANBURU IRASTORZA, Andoitz, 20577 ANTZUOLA (ES)
(74) Representative: Igartua, Ismael

(56) References cited:
- WO-A1-2017/186675
- DE-A1- 2 929 800
- JP-A- S6 478 781
- US-A- 4 448 056
- US-B1- 6 435 336

## Description

### TECHNICAL FIELD

The present invention relates to systems and methods for transporting workpieces in forming machines.

### PRIOR ART

During workpiece transformation processes carried out in forming machines, the workpieces are generally transported between different stations of the machine by means of a suitable transport system. As a general rule, the system used comprises a gripping device with at least one clamp configured for gripping the workpieces to be transported and an actuator to cause the clamp to grip or release said workpiece.

Patent document US6435336B1 discloses a system of this type. Each clamp comprises two opposing arms rotating in opposite directions simultaneously for gripping or releasing the workpiece. If the diameter of the workpiece to be transported is to be modified, at least the arms of the clamp are replaced with other arms configured for the new diameter.

WO2017186675A1, which forms the basis for the preamble of claims 1 and 9, J Z discloses a transport system for transporting workpieces in forming machines. The transport system comprises at least one gripping assembly comprising a main carriage and a gripping device configured for gripping at least one workpiece and attached to the main carriage. The gripping device comprises at least one clamp configured for gripping or releasing the workpiece and a clamp actuator configured for causing the movement of the clamp so that said clamp closes and/or opens for gripping and/or releasing a workpiece. The clamp comprises two opposing arms between which the workpiece is gripped.

### DISCLOSURE OF THE INVENTION

The object of the invention is to provide a transport system and method, as defined in the claims.

A first aspect of the invention relates to a transport system which is configured for transporting workpieces in forming machines, and comprising at least one gripping assembly with a main carriage and a gripping device which is configured for gripping a workpiece and is attached to the main carriage.

The gripping device comprises at least one clamp configured for gripping or releasing the workpiece, and a clamp actuator configured for causing the movement of the clamp so that said clamp closes and/or opens for gripping and/or releasing a workpiece.

The gripping assembly comprises a main actuator configured for causing linear displacement of the main carriage from a standby position opposite a work station of the forming machine to said work station and vice versa, and the system comprises a control device which is configured for acting on both actuators to cause the linear displacement of the main carriage and the movement of the clamp so that said clamp closes and/or opens for gripping and/or releasing a workpiece to be generated in a coordinated manner, depending on the diameter of the workpiece to be transported.

Further, a main carriage and an associated gripping device form a gripping assembly, the system comprises a plurality of gripping assemblies and the control device is configured for controlling the respective actuators of each of the gripping assembly independently, depending on the needs and/or requirements of each gripping assembly.

It is therefore possible to adapt the necessary movements of the different elements of the system depending on the diameter of the workpiece to be transported in an automatic manner, where workpieces of different diameters can be transported with one and the same gripping device in a simple and automatic manner.

A second aspect of the invention relates to a method for transporting workpieces in forming machines by means of a system comprising at least one gripping assembly with a main carriage and a gripping device configured for gripping a workpiece and attached to the main carriage, the gripping device comprising at least one clamp configured for gripping or releasing the workpiece, and a clamp actuator configured for causing the movement of the clamp so that said clamp closes and/or opens for gripping and/or releasing a workpiece, and the clamp comprising two opposing arms between which the workpiece is gripped.

In order to transport a workpiece, linear displacement of the main carriage from a standby position opposite a work station of the forming machine to said work station and/or vice versa, generated by means of a main actuator, is controlled, and both actuators are acted on to cause the linear displacement of the main carriage and the movement of the clamp so that said clamp closes and/or opens for gripping and/or releasing a workpiece to be generated in a coordinated manner, depending on the diameter of the workpiece to be transported. Further, a plurality of gripping assemblies is controlled, each gripping assembly comprising at least one main carriage and an associated gripping device, such that the respective actuators are controlled independently, depending on the needs and/or requirements of each gripping assembly.

Therefore, the advantages discussed for the first aspect of the invention are also obtained with the method. These and other advantages and features of the invention will become evident in view of the drawings and detailed description of the invention.

### DESCRIPTION OF THE DRAWINGS

Figure 1 shows a perspective view of an embodiment of the system of the invention.
Figure 2 shows a perspective view of a gripping assembly of the system of Figure 1.
Figure 3 shows a gripping device of the gripping assembly of Figure 2 (without the clamp actuator).
Figure 4 shows the clamp of the gripping device of Figure 3.
Figure 5 shows a linear entry/exit path of a clamp of the gripping assembly of Figure 2 on the workpiece.
Figure 6 shows an arm of a clamp of the gripping assembly of Figure 2.
Figure 7 shows an arm of a clamp of another embodiment of the gripping assembly with a compensation element.

### DETAILED DISCLOSURE OF THE INVENTION

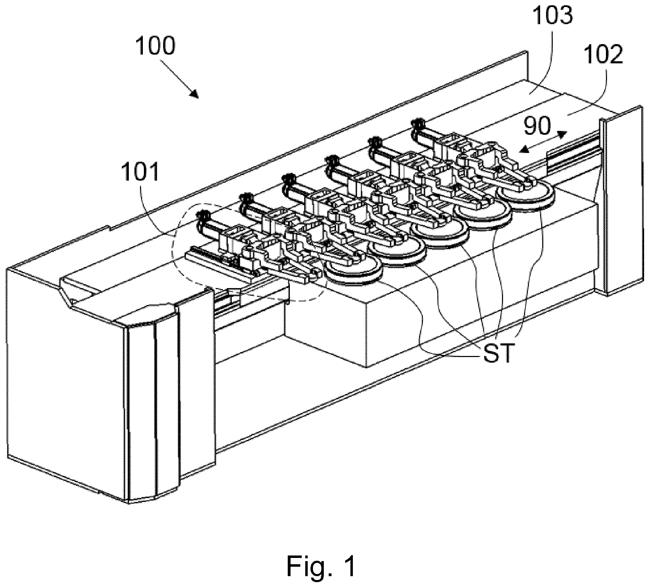

A first aspect of the invention relates to a transport system 100 like the one shown by way of example in Figure 1 for transporting workpieces P in forming machines from one work station ST to another, such as at least one press where the workpiece P is formed by means of the dies of said press.

The system 100 comprises at least one gripping assembly 101 which is configured for being linearly displaced in a transport direction 90, parallel to the work stations ST, for being arranged opposite one work station ST or another. The workpieces P can thereby be transported between the different work stations ST. The system 100 comprises a frame 103, and the gripping assembly 101 is associated with the frame 103 with freedom of displacement at least in the transport direction 90.

A system 100 may comprise as many gripping assemblies 101 as required (six in the example of Figure 1), and in the event of comprising a plurality of such assemblies, preferably all of them move integrally in said transport direction 90.

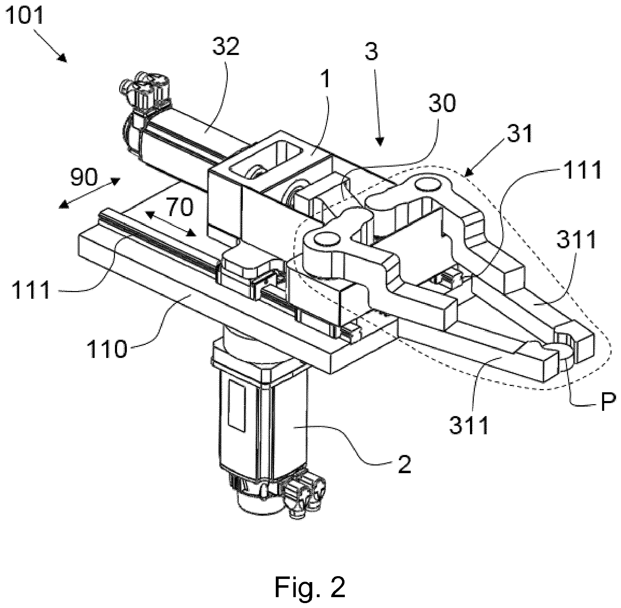

A gripping assembly 101 comprises at least one main carriage 1 and a gripping device 3 attached to the main carriage 1, as shown by way of example in Figure 2.

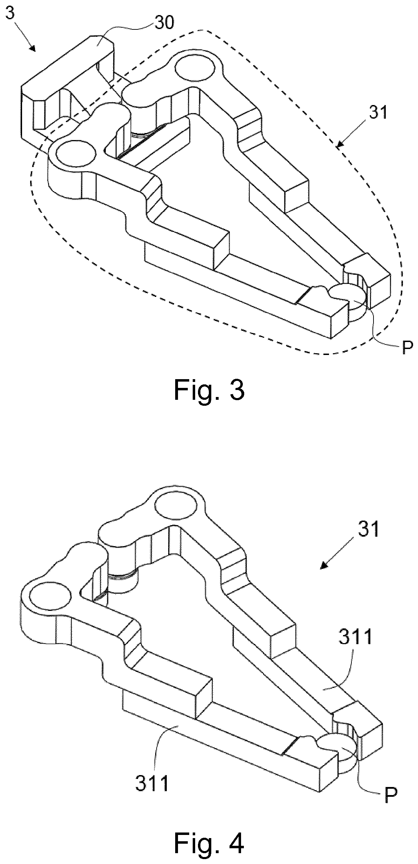

As shown in Figure 3, the gripping device 3 is configured for gripping the workpiece P to be transported, and to that end it comprises at least one clamp 31 configured for enabling the gripping of said workpiece P. As shown in Figure 4, the clamp 31 comprises two opposing arms 311 between which the workpiece P is gripped, and the gripping assembly 101 further comprises a clamp actuator 32 to cause the clamp 31 to open or close in order to release or grip a workpiece P. Preferably, the arms 311 move simultaneously and in opposite directions when the clamp 31 opens and closes.

The main carriage 1 is configured for moving the gripping device 3 closer to or farther away from the corresponding work station ST. For example, once the gripping assembly 101 is arranged opposite the work station ST comprising a workpiece P to be gripped in order to transport it to another work station ST, displacement of the main carriage 1 towards said work station ST is caused so that the gripping device 3 can grip said workpiece P, and then the backward movement of said gripping device 3 is caused so that the gripping assembly 101 is subsequently displaced in the transport direction 90 in order to place it opposite another different work station ST, if required.

The main carriage 1 is configured for being linearly displaced in a linear displacement direction 70 transverse to the transport direction 90 to move the gripping device 3 closer to or farther away from the corresponding work station ST. The gripping assembly 101 comprises a main actuator 2 configured for causing said linear displacement of the main carriage 1.

Preferably, the gripping device 3 comprises an auxiliary carriage 30 attached to the main carriage 1 with freedom of displacement, the direction of said linear displacement corresponding with the linear displacement direction 70 of the main carriage 1. The clamp actuator 32 simultaneously causes the relative linear displacement in the linear displacement direction 70 of the auxiliary carriage 30 with respect to the main carriage 1, and the opening or closing of the clamp 31 (opening in a displacement direction of the auxiliary carriage 30 and closing in the opposite direction).

The arms 311 of the clamp 31 are suitable for rotating with respect to a rotation shaft for opening/closing, and said rotation shaft is fixed to the main carriage 1. One of the ends of the arms 311 is suitable for gripping the workpiece P, whereas the other end is associated with the auxiliary carriage 30 and is displaced when said auxiliary carriage 30 is displaced with respect to the main carriage 1, causing the rotation of the arms 311 with respect to the rotation shaft fixed to the main carriage 1 (which is between both ends of the arms 311).

The system 100 comprises a control device (not depicted in the drawings) which is configured for acting on both actuators 2 and 32 to cause the linear displacement of the main carriage 1 and the movement of the gripping device 3 (relative linear displacement in the linear displacement direction 70 of the auxiliary carriage 30 with respect to the main carriage 1, and opening or closing of the clamp 31) to be generated in a coordinated manner, depending on at least the diameter of the workpiece P to be gripped or released.

Therefore, as a result of the displacements/movements of the main carriage 1 and of the gripping device 3 having been made independent of one another and of the fact that the movements of both are performed in a controlled and coordinated manner, it is possible to securely grip and release workpieces P having different diameters, since that coordination takes the diameter of the workpiece P into account in each case. Furthermore, this coordination is performed in an automatic manner based on knowing the diameter of the workpiece P, thereby making the user's job easier because it is possible to dispense with performing manual adjustments every time the diameter of the workpiece P changes, which would entail a minimum time required for making said change and the need for an expert user to be able to do it. For example, the coordination allows moving the gripping device 3 closer to the workpiece P to a greater or lesser extent in order to grip it, closing the clamp 31 to a greater or lesser extent in order to adjust it to the corresponding diameter, and even regulating when the clamp 31 starts to close in order for it to come into contact with the workpiece P with a required path (this final aspect is described in detail below).

In the system 100 of the invention, one and the same clamp 31 is configured for being able to transport workpieces P with a diameter comprised within a given range as a result of the adjustment allowed by the coordination, and if workpieces P with a diameter outside said range are to be transported, the clamp 31 must be replaced with another suitable clamp 31 for the new diameter or range of diameters (in the prior art the change would be necessary provided that the diameter changes). However, even in this case the adjustment to the new diameter with the new clamp 31 would also be done in an automatic manner, without wasting any time and without the need for an expert user, by means of the coordination of the different elements as discussed, and it would simply require a change of clamps 31 for a new range of diameters (or gripping device 3 or gripping assembly 101), but without requiring the additional adjustments necessary in the prior art.

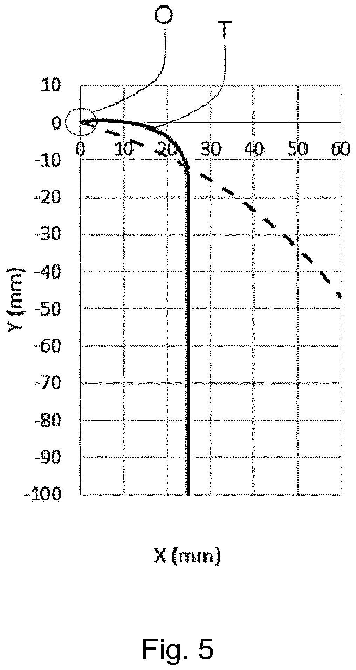

To generate the coordination between the displacements/movements of the main carriage 1 and of the gripping device 3, the control device is configured for being able to furthermore take into account the cycle of the actuators 2 and 32 of the gripping assembly 101 (the running and stopping of each of the elements associated with said actuators 2 and 32), which allows adjusting the path T of the clamp 31 (path T depicted in Figure 5 by way of example and described in detail below). To that end, the control device is furthermore preferably configured for considering the stroke of the main carriage 1 in its linear displacement. Therefore, by knowing the cycle of the actuators 2 and 32 (running and stopping times) and the stroke of the main carriage 1, the path T can be adjusted to whatever may be required.

Preferably, this data is entered by the user by means of a user interface not depicted in the drawings, thereby defining the desired path T. The control device is communicated with the user interface and is configured for causing said path T considering said parameters entered by the user, in addition to the diameter of the workpiece P. Depending on the diameter of said workpiece P, which is preferably also entered by the user, and on the rest of the parameters, the control device adjusts said path T.

Preferably, the control device is furthermore configured for also considering the dimensions of the arms 311 of the clamp 31 of the gripping device 3 since for different lengths of arms 311, for example, the displacement of the arms 311 for correctly gripping the workpiece P will vary, and the degree of opening required for said arms 311 (opening stroke for opening the arms 311 with respect to the workpiece P arranged between them) will also vary. These parameters are also preferably entered by the user.

Preferably, the control device is furthermore configured for taking into account the press cycle. A press cycle is defined by the stroke of the press. The press can transition from its open position to its closed position and back to its open position, this complete displacement being understood as a press cycle (a 360° movement). Therefore, the press is in the uppermost position possible (open press) when its stroke is preferably at 0° or 360° of its cycle, and it is in the lowermost position possible (press closed) when its stroke is preferably at 180°. The press cycle is considered for establishing when the main carriage 1 and the clamp 31 can be displaced in order to prevent one of them from interfering with the press itself during the displacement of said press, knowing that they may interfere with the press when said press is at 180° or close to 180° of the stroke of a cycle. A range of said press cycle in which said displacements are allowed can thereby be established, because it is assured that they do not interfere with the press in said range, said range being the information that is considered for performing the control (the starting and end points of the range). This data can furthermore be entered by a user (preferably in the form of degrees of the press cycle).

The control of the cycle of the actuators 2 and 32 is performed within the range allowed for the press cycle so that the movement of the main carriage 1 and of the clamps 31 does not interfere with the press, the moment within said range in which both the main carriage 1 and the clamp 31 have to start moving and have to stop being defined, the path T being a result of said times. This running and stopping of the main carriage 1 and of the clamp 31 are thereby associated with the press cycle, the degrees of the press at which they must occur being indicated. This data can be entered by a user, depending on the path T that may be required.

Based on the parameters taken into account, in each case, the control device is configured for controlling a plurality of parameters and/or variables relating to both the main carriage 1 and the clamp 31 such as at least the speed of the displacement of the main carriage 1 and of the movement of the clamp 31, the acceleration of both movements, and, as discussed, the start time and end time of each of said movements (they are related to the press cycle and the cycle of the main carriage 1 and of the gripping device 3). In a preferred embodiment, the control device is configured for performing said control, considering the following parameters:
- the diameter of the workpiece P,
- the stroke of the main carriage 1 in its linear displacement,
- the dimensions of the arms 311 of the clamp 31 of the gripping device 3, since for different lengths of arms 311, for example, the displacement of the arms 311 for correctly gripping the workpiece P will vary,
- the degree of opening of said arms 311 (opening stroke of the arms 311 with respect to the workpiece P arranged between them),
- the press cycle, and
- the cycle of the actuators 2 and 32 of the gripping assembly 101.

Furthermore, the force with which the workpiece P is to be gripped, and even the rate of the press (cycles/min), may also be taken into account.

To control the displacements of the main carriage 1 and of the gripping device 3, the control device is configured for determining first of all what is the final position of both the main carriage 1 and of the clamp 31 depending on the corresponding parameters, and furthermore taking said final position into account, it performs the control of the speeds and accelerations of the movements of the main carriage 1 and of the gripping device 3. For example, the closing or opening force of the clamp 31 can thereby be adjusted as desired in a simple, secure and controlled manner, and the entry or exit path T of the clamp 31 with respect to the workpiece P (of the arms 311) can be adjusted as may be required. For example, the clamp 31 may be required to enter or exit following a transverse path T with respect to the workpiece P (path T depicted by way of example in Figure 5, where point O is the point of contact with the workpiece P), such that it is assured that the workpiece P will be kept in the desired position when it is released (the clamp 31 does not move the workpiece P when it releases it due to its path T), and that the workpiece P will be gripped correctly when gripping thereof is required (preventing the clamp 31 from coming into undesired contact with the workpiece P when it closes, moving it, which could lead to it not being correctly gripped later), with the center of the workpiece P always being kept in the same position in each of the work stations ST, regardless of the diameter of said workpiece P (usually in the center of the die), as a result of said coordination.

These parameters (and variables) are known by the system 100 either because they are manufacturing measurements or because a user has entered them (as discussed), where it is enough for the control device to simply make geometric and/or time calculations considering these parameters, in order to adapt the actions of the actuators 2 and 32 to the requirements, the system 100 thereby being easy to put into practice.

The system 100 further comprises a user interface communicated with the control device, as discussed above, through which a user can enter the different parameters, such as the diameter of the workpiece P to be transported. The control device is configured for determining that the diameter of the workpiece P to be considered is the diameter entered by the user and for performing the required coordination taking into account said diameter entered by the user. This allows making the system 100 easier and simpler, since no additional device is required for detecting the diameter of the workpiece P to be transported, which could make said device more costly and more complex. Through the user interface, the user could furthermore enter additional information, such as, for example, the information necessary for determining the entry or exit path of the required workpiece P, the force required on the workpiece P when gripping it, and/or the dimensions of a new clamp 31. The control device is configured for considering this information accordingly, and for considering it in the calculation performed for coordinating the actions of the actuators 2 and 32 (as discussed).

Through the user interface, the user could furthermore enter the dimensions of a new clamp 31 in the event that an existing clamp 31 is replaced with another one (or the reference of the clamp 31 can simply be indicated in the event that the dimensions of the possible clamps were previously stored in the system 100).

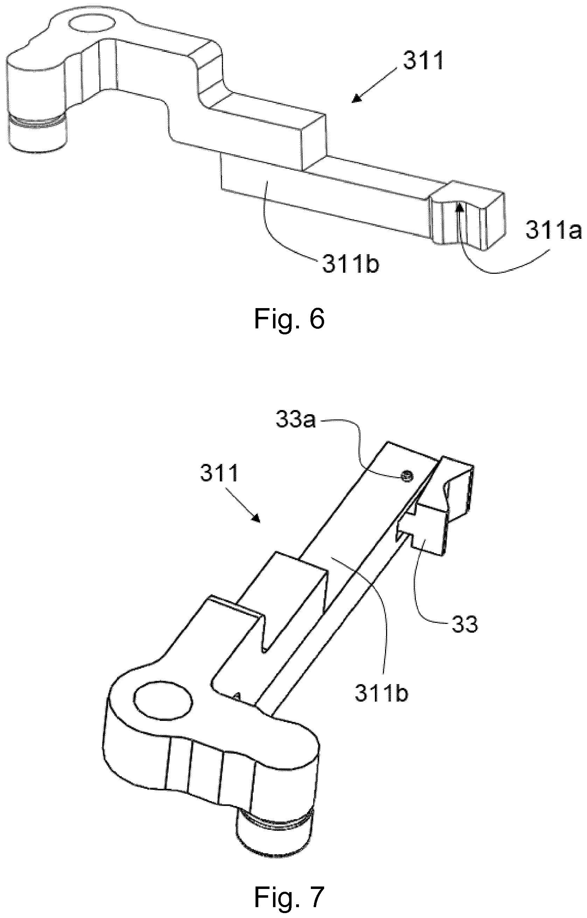

The arms 311 of the clamp 31 may comprise different configurations depending on the workpiece P to be gripped and/or on how this workpiece P is to be gripped (with two, three or four gripping points). In the system 100 preferably one of the arms 311 comprises a substantially V-shaped surface 311a for coming into contact with the workpiece P at two points, as shown in Figure 6, for example, and the other arm 311 comprises a compensation element 33 attached to the main body 311b of the arm 311 (shown by way of example in Figure 7) with rotational freedom. Said compensation element 33 is arranged opposite the surface 311a of the other arm 311 of the clamp 31, and comprises a substantially V-shaped surface which is opposite the surface 311a of the other arm 311. The workpiece P is therefore gripped between both arms 311 by two substantially V-shaped surfaces, with four gripping points being obtained. However, if the workpiece P has irregularities on its outer surface, which is the norm, said irregularities would mean that there are not four gripping points, with the grip being less firm than what is sought. The presence of the compensation element 33 with rotational freedom with respect to a rotation shaft 33a fixed to the main body 311b of the corresponding arm 311 seeks to counteract this effect, since said rotation allows adjusting it so that the four gripping points required in this case can be obtained, thereby assuring a firm grip on the workpiece P despite the irregularities it may have (the compensation element 33 adapts to the irregularities). The compensation element 33 is preferably attached to the corresponding arm 311 by its vertex, with freedom of rotation on said vertex, and it is arranged such that it can rotate with respect to said arm 311.

As discussed above, a system 100 may comprise as many gripping assemblies 101 as needed. According to the invention, a system 100 comprises a plurality of gripping assemblies 101, the control device is configured for controlling the respective actuators 2 and 32 of each gripping assembly 101 independently (linear displacements perpendicular to the transport direction 90), depending on the needs and/or requirements of each gripping assembly 101.

The system 100 comprises at least one guide rail 111 for each gripping assembly 101, preferably two guide rails 111 for each gripping assembly 101. The guide rail 111 extends in the linear displacement direction 70, and the main carriage 1 of a gripping assembly 101 is associated with the corresponding guide rail 111, such that said guide rail 111 serves as a guide for the linear displacement of said main carriage 1 in the linear displacement direction 70.

Preferably, the system 100 comprises a platform 102 attached to the frame 103 with freedom of displacement in the transport direction 90. In some embodiments, the guide rail 111 is fixed to the platform 102 of the system 100. In other embodiments, each gripping assembly 101 comprises a support 110 fixed to the platform 102, and the corresponding guide rail 111 is fixed to said support 110, as shown in Figure 2 for example. In these latter embodiments, the actuator 2 is preferably secured to said support 110.

Arranging a support 110 allows readily replacing one gripping assembly 101 with another since it is enough to simply release the corresponding support 110 from the platform 102 and fix a new support 110 to said platform 102 (the new support 110 belonging to a new gripping assembly 101). In the absence of a support 110, the guide rail 111 would be fixed directly to the platform 102, and in the event of having to replace the gripping assembly 101, it would be more complex since the main carriage 1 would at least have to be released from said guide rail 111.

Preferably, in any of the embodiments, the main actuator 2 comprises a servomotor and the clamp actuator 32 comprises another servomotor.

A second aspect of the invention relates to a method for transporting workpieces P in forming machines, from one work station ST to another work station ST of said machine, by means of a system 100 like the one in the first aspect of the invention. Said system 100 comprises at least one gripping assembly 101 with a main carriage 1 and a gripping device 3 configured for gripping a workpiece P and attached to the main carriage 1, the gripping device 3 comprising at least one clamp 31 configured for gripping or releasing the workpiece P, and a clamp actuator 32 configured for causing the movement of the clamp 31 so that said clamp 31 closes and/or opens for gripping and/or releasing a workpiece P. The clamp 31 comprises two opposing arms 311 between which the workpiece P is gripped, when required.

In the method, in order to transport a workpiece P linear displacement 70 of the main carriage 1 from a standby position opposite a work station ST of the forming machine to said work station ST and/or vice versa, generated by means of the main actuator 2, is controlled, and both actuators 2 and 32 are acted on to cause the linear displacement 70 of the main carriage 1 and the movement of the clamp 31 so that said clamp 31 closes and/or opens for gripping and/or releasing a workpiece P to be generated in a coordinated manner, depending on the diameter of the workpiece P to be transported. The advantages discussed above for the first aspect of the invention are thereby obtained.

For the coordination, a plurality of variables relating to the main carriage 1 and the clamp 31 are controlled, such as, for example, the speed of the displacement of the main carriage 1 and of the movement of the clamp 31, and the acceleration of both movements, based at least on the diameter of the workpiece P to be transported, considering a plurality of parameters (as discussed for the first aspect of the invention).

In a preferred embodiment, as also discussed for the preferred embodiment of the first aspect of the invention, to perform the mentioned control, and therefore to carry out the coordination, in addition to the diameter of the workpiece P to be transported at least the following are taken into account:
- the stroke of the main carriage 1 in its linear displacement 70,
- the dimensions of the arms 311 of the clamp 31 of the gripping device 3, since for different lengths of arms 311, for example, the displacement of the arms 311 for correctly gripping the workpiece P will vary,
- the degree of opening of said arms 311 (opening stroke of the arms 311 with respect to the workpiece P arranged between them), and
- the cycle of the press, and
- the cycle of the main carriage 1 and of the gripping device 3.

Furthermore, the force with which the workpiece P is to be gripped, and even the rate of the press (cycles/min), may also be taken into account.

These parameters and/or variables can be entered in the system 100 by the user in order to be considered by the control device (some may be imposed ex-works).

Preferably, the gripping device 3 comprises an auxiliary carriage 30 attached to the main carriage 1 with linear displacement freedom, the direction of said linear displacement corresponding with the linear displacement direction 70 of the main carriage 1. The linear displacement of said auxiliary carriage 30 and the displacement of the arms 311 with respect to said auxiliary carriage 30 are generated with one and the same actuation of the clamp actuator 32, i.e., when the clamp actuator 32 causes the movement of the gripping device 3, the auxiliary carriage 30 is simultaneously displaced with respect to the main carriage 1, and the clamp 31 opens or closes.

According to the invention, the system 100 comprises a plurality of gripping assemblies 101, with each gripping assembly 101 comprising at least one main carriage 1 and an associated gripping device 3, and the displacements caused by the respective actuators 2 and 32 are controlled independently, depending on the needs and/or requirements of each gripping assembly 101.

All the features described in relation to the system 100 of the first aspect of the invention are understood as also having been described for the method of the second aspect of the invention, in any of its configurations and/or embodiments.

## Claims

1. Transport system for transporting workpieces in forming machines, comprising at least one gripping assembly (101) comprising a main carriage (1) and a gripping device (3) configured for gripping at least one workpiece (P) and attached to the main carriage (1), the gripping device (3) comprising at least one clamp (31) configured for gripping or releasing the workpiece (P) and a clamp actuator (32) configured for causing the movement of the clamp (31) so that said clamp (31) closes and/or opens for gripping and/or releasing a workpiece (P), the clamp (31) comprising two opposing arms (311) between which the workpiece (P) is gripped, the gripping assembly (101) comprising a main actuator (2) configured for causing linear displacement of the main carriage (1) in a given linear displacement direction (70), from a standby position opposite a work station (ST) of the forming machine to said work station (ST) and vice versa, **characterised in that** the system (100) comprises a control device which is configured for acting on both actuators (2, 32) of the gripping assembly (101) to cause the linear displacement of the main carriage (1) and the movement of the clamp (31) so that said clamp (31) closes and/or opens for gripping and/or releasing a workpiece (P) to be generated in a coordinated manner, depending on the diameter of the workpiece (P) to be transported, a main carriage (1) and an associated gripping device (3) forming a gripping assembly (101), the system (100) comprising a plurality of gripping assemblies (101) and the control device being configured for controlling the respective actuators (2, 32) of each of said gripping assemblies (101) independently, depending on the needs and/or requirements of each gripping assembly (101).

2. Transport system according to claim 1, wherein to generate said coordination, the control device is configured for controlling at least the speed of the displacement of the main carriage (1) and of the movement of the clamp (31), the acceleration of both movements, the start time and end time of each of said movements, and the position of the main carriage (1) and of the arms (311) of the clamp (31).

3. Transport system according to claim 2, wherein to perform the coordination the control device is configured for considering, in addition to the diameter of the workpiece (P) to be transported, the cycle of the actuators (2, 32) of the gripping assembly (101), the stroke of the main carriage (1) in its linear displacement, the dimensions of the arms (311) of the clamp (31) of the gripping device (3), and the degree of opening of said arms (311).

4. Transport system according to claim 3, wherein to perform the coordination the control device is configured for furthermore considering the cycle of the forming machine, said control device being configured for controlling the cycle of the actuators (2, 3) of the gripping assembly (101) depending on the cycle of the forming machine, and preferably the rate of said forming machine.

5. Transport system according to any of claims 1 to 4, comprising a user interface communicated with the control device, through which a user can enter the parameters considered by the control device to perform the coordination, including the parameter relative to the diameter of the workpiece (P).

6. Transport system according to any of claims 1 to 5, comprising a compensation element (33) attached to a main body (311b) of at least one of said arms (311) with rotational freedom, such that it is opposite the other arm (311), the compensation element (33) comprising a substantially V-shaped contact surface, which is opposite the other arm (311), said compensation element (33) being attached to the corresponding arm (311) such that it has rotational freedom with respect to the vertex of the substantially V-shaped contact surface.

7. Transport system according to any of claims 1 to 6, wherein the gripping device (3) comprises an auxiliary carriage (30) attached to the main carriage (1) with linear displacement freedom, said linear displacement being parallel to the linear displacement caused by the main actuator (2), the clamp actuator (32) being configured for causing the linear displacement of said auxiliary carriage (30) and the clamp (31) being attached to said auxiliary carriage (30) with rotational freedom such that said clamp (31) rotates, opening or closing, when the auxiliary carriage (30) is displaced with respect to the main carriage (1).

8. Transport system according to any of claims 1 to 7, comprising a stationary frame (103), a platform (102) attached to the frame (103) with freedom of displacement in a transport direction (90) transverse to the linear displacement direction (70) of the main carriage (1), and at least one guide rail (111) for each gripping assembly (101), the guide rail (111) being fixed to the platform (102) or to a support (110) of the corresponding gripping assembly (101), which is fixed to said platform (102), and said guide rail (111) extending in the linear displacement direction (70) of the main carriage (1), the main carriage (1) of a gripping assembly (101) being associated with the corresponding guide rail (111) such that said main carriage (1) moves linearly guided by said guide rail (111) in the linear displacement direction (70).

9. Method for transporting workpieces in forming machines by means of a system (100) comprising at least one gripping assembly (101) with a main carriage (1) and a gripping device (3) configured for gripping a workpiece (P) and attached to the main carriage (1), the gripping device (3) comprising at least one clamp (31) configured for gripping or releasing the workpiece (P), and a clamp actuator (32) configured for causing the movement of the clamp (31) so that said clamp (31) closes and/or opens for gripping and/or releasing a workpiece (P), and the clamp (31) comprising two opposing arms (311) between which the workpiece (P) is gripped, and, in order to transport a workpiece (P), the linear displacement of the main carriage (1) in a given linear displacement direction (70) from a standby position opposite a work station (ST) of the forming machine to said work station (ST) and/or vice versa, generated by means of a main actuator (2), is controlled, **characterised in that** both actuators (2, 32) are acted on to cause the linear displacement of the main carriage (1) and the movement of the clamp (31) so that said clamp (31) closes and/or opens for gripping and/or releasing a workpiece (P) to be generated in a coordinated manner, depending on the diameter of the workpiece (P) to be transported, a plurality of gripping assemblies (101) being controlled, each gripping assembly (101) comprising at least one main carriage (1) and an associated gripping device (3), such that the respective actuators (2, 32) are controlled independently, depending on the needs and/or requirements of each gripping assembly (101).

10. Method according to claim 9, wherein for the coordination, at least the speed of the displacement of the main carriage (1) and of the movement of the clamp (31), the acceleration of both movements, the start time and end time of each of said movements, and the position of the main carriage (1) and of the arms (311) of the clamp (31) are controlled.

11. Method according to claim 10, wherein to perform the coordination, in addition to the diameter of the workpiece (P) to be transported, the cycle of the actuators (2, 32) of the gripping assembly (101), the stroke of the main carriage (1) in its linear displacement, the dimensions of the arms (311) of the clamp (31) of the gripping device (3), and the degree of opening of said arms (311) are considered.

12. Method according to claim 10, wherein to perform the coordination, the cycle of the forming machine is furthermore considered, the cycle of the actuators (2, 3) of the gripping assembly (101) being controlled depending on the cycle of the forming machine, and preferably the rate of said forming machine.

13. Method according to any of claims 9 to 12, wherein the gripping device (3) comprises an auxiliary carriage (30) attached to the main carriage (1) in the linear displacement direction (70) of the main carriage (1) with linear displacement freedom, the linear displacement of said auxiliary carriage (30) in said linear displacement direction (70) with respect to the main carriage (1) and the displacement of the arms (311) with respect to said auxiliary carriage (30) being caused when the movement of the gripping device (3) is caused.

## Patentansprüche

1. Transportsystem zum Transport von Werkstücken in Formgebungsmaschinen, umfassend mindestens eine Greifbaugruppe (101) umfassend einen Hauptschlitten (1) und eine Greifvorrichtung (3), welche dazu ausgebildet ist, mindestens ein Werkstück (P) zu greifen und am Hauptschlitten (1) befestigt ist, wobei die Greifvorrichtung (3) mindestens eine Klemme (31), welche dazu ausgebildet ist, das Werkstück (P) zu greifen oder freizulassen, und einen Klemmenaktuator (32), welcher dazu ausgebildet ist, die Bewegung der Klemme (31) hervorzurufen, sodass sich die genannte Klemme (31) schließt und/oder öffnet, um ein Werkstück (P) zu greifen und/oder freizulassen, umfasst, wobei die Klemme (31) zwei gegenüberliegende Arme (311) umfasst, zwischen welchen das Werkstück (P) gegriffen wird, wobei die Greifbaugruppe (101) einen Hauptaktuator (2) umfasst, welcher dazu ausgebildet ist, die lineare Verschiebung des Hauptschlittens (1) in einer gegebenen linearen Verschiebungsrichtung (70), von einer Wartestellung, einer Arbeitsstation (ST) der Formgebungsmaschine gegenüberliegend, zur genannten Arbeitsstation (ST) und umgekehrt, hervorzurufen, **dadurch gekennzeichnet, dass** das System (100) eine Steuervorrichtung umfasst, welche dazu ausgebildet ist, auf beide Aktuatoren (2, 32) der Greifbaugruppe (101) zu wirken, um die lineare Verschiebung des Hauptschlittens (1) und die Bewegung der Klemme (31) hervorzurufen, sodass das Schließen und/oder Öffnen der genannten Klemme (31), um ein Werkstück (P) zu greifen und/oder freizulassen, in Abhängigkeit des Durchmessers des zu transportierenden Werkstücks (P) koordiniert erzeugt wird, wobei ein Hauptschlitten (1) und eine assoziierte Einstellungsvorrichtung (3) eine Greifbaugruppe (101) bilden, wobei das System (100) eine Vielzahl von Greifbaugruppen (101) umfasst und die Steuervorrichtung dazu ausgebildet ist, die jeweiligen Aktuatoren (2, 32) jeder der genannten Greifbaugruppen (101), in Abhängigkeit der Bedürfnisse und/oder Anforderungen jeder Greifbaugruppe (101), unabhängig zu steuern.

2. Transportsystem nach Anspruch 1, wobei, um die genannte Koordination zu erzeugen, die Steuervorrichtung dazu ausgebildet ist, mindestens die Geschwindigkeit der Verschiebung des Hauptschlittens (1) und der Bewegung der Klemme (31), die Beschleunigung beider Bewegungen, die Startzeit und Endzeit jeder der genannten Bewegungen und die Stellung des Hauptschlittens (1) und der Arme (311) der Klemme (31) zu steuern.

3. Transportsystem nach Anspruch 2, wobei, um die genannte Koordination durchzuführen, die Steuervorrichtung dazu ausgebildet ist, zusätzlich zum Durchmesser des zu transportierenden Werkstücks (P), den Zyklus der Aktuatoren (2, 32) der Greifbaugruppe (101), den Hubweg des Hauptschlittens (1) in dessen linearen Verschiebung, die Abmessungen der Arme (311) der Klemme (31) der Greifvorrichtung (3), und den Öffnungsgrad der genannten Arme (311) zu berücksichtigen.

4. Transportsystem nach Anspruch 3, wobei, um die genannte Koordination durchzuführen, die Steuervorrichtung dazu ausgebildet ist, ferner den Zyklus der Formgebungsmaschine zu berücksichtigen, wobei die genannte Steuervorrichtung dazu ausgebildet ist, den Zyklus der Aktuatoren (2, 3) der Greifbaugruppe (101) in Abhängigkeit des Zyklus der Formgebungsmaschine und vorzugsweise des Tempos der genannten Formgebungsmaschine zu steuern.

5. Transportsystem nach einem der Ansprüche 1 bis 4, umfassend eine Benutzerschnittstelle, welche mit der Steuervorrichtung kommuniziert, durch welche ein Benutzer die von der Steuervorrichtung berücksichtigten Parameter eingeben kann, um die genannte Koordination durchzuführen, einschließlich der Parameter bezüglich des Durchmessers des Werkstücks (P).

6. Transportsystem nach einem der Ansprüche 1 bis 5, umfassend ein Ausgleichelement (33), welches an einem Hauptkörper (311b) mindestens eines der genannten Arme (311) mit Rotationsfreiheit befestigt ist, sodass dem anderen Arm (311) gegenüberliegt, wobei das Ausgleichelement (33) eine im Wesentlichen V-förmige Kontaktfläche umfasst, welche dem anderen Arm (311) gegenüberliegt, wobei das genannte Ausgleichelement (33) am entsprechenden Arm (311) befestigt ist, sodass es Rotationsfreiheit in Bezug auf den Scheitelpunkt der im Wesentlichen V-förmigen Kontaktfläche hat.

7. Transportsystem nach einem der Ansprüche 1 bis 6, wobei die Greifvorrichtung (3) einen Hilfsschlitten (30) umfasst, welcher am Hauptschlitten (1) mit linearer Verschiebungsfreiheit befestigt ist, wobei die genannte lineare Verschiebung parallel zur linearen Verschiebung ist, welche vom Hauptaktuator (2) hervorgerufen wird, wobei der Klemmenaktuator (32) dazu ausgebildet ist, die lineare Verschiebung des genannten Hilfsschlittens (30) hervorzurufen, und die Klemme (31) am genannten Hilfsschlitten (30) mit Rotationsfreiheit befestigt ist, sodass die genannte Klemme (31) rotiert, sich öffnet oder schließt, wenn der Hilfsschlitten (30) in Bezug auf den Hauptschlitten (1) verschoben wird.

8. Transportsystem nach einem der Ansprüche 1 bis 7, umfassend einen feststehenden Rahmen (103), eine Plattform (102), welche am Rahmen (103) mit Verschiebungsfreiheit in einer Transportrichtung (90) quer zur linearen Verschiebungsrichtung (70) des Hauptschlittens (1) befestigt ist, und mindestens eine Führungsschiene (111) für jede Greifbaugruppe (101), wobei die Führungsschiene (111) an der Plattform (102) oder an einer Stütze (110) der entsprechenden Greifbaugruppe (101) fixiert ist, welche an der genannten Plattform (102) fixiert ist, und wobei sich die genannte Führungsschiene (111) in der linearen Verschiebungsrichtung (70) des Hauptschlittens (1) erstreckt, wobei der Hauptschlitten (1) einer Greifbaugruppe (101) mit der entsprechenden Führungsschiene (111) assoziiert ist, sodass sich der genannte Hauptschlitten (1), von der genannten Führungsschiene (111) geführt, in der linearen Verschiebungsrichtung (70) linear bewegt.

9. Verfahren zum Transport von Werkstücken in Formgebungsmaschinen mittels eines Systems (100) umfassend mindestens eine Greifbaugruppe (101) mit einem Hauptschlitten (1) und einer Greifvorrichtung (3), welche dazu ausgebildet ist, ein Werkstück (P) zu greifen und am Hauptschlitten (1) befestigt ist, wobei die Greifvorrichtung (3) mindestens eine Klemme (31), welche dazu ausgebildet ist, das Werkstück (P) zu greifen oder freizulassen, und einen Klemmenaktuator (32), welcher dazu ausgebildet ist, die Bewegung der Klemme (31) hervorzurufen, sodass sich die genannte Klemme (31) schließt und/oder öffnet, um ein Werkstück (P) zu greifen und/oder freizulassen, umfasst, und wobei die Klemme (31) zwei gegenüberliegende Arme (311), zwischen welchen das Werkstück (P) gegriffen wird, und, um ein Werkstück (P) zu transportieren, die lineare Verschiebung des Hauptschlittens (1) in einer gegebenen linearen Verschiebungsrichtung (70) von einer Wartestellung, einer Arbeitsstation (ST) der Formgebungsmaschine gegenüberliegend, zur genannten Arbeitsstation (ST) und/oder umgekehrt, welche mittels eines Hauptaktuators (2) erzeugt wird, gesteuert wird, umfasst, **dadurch gekennzeichnet, dass** auf beide Aktuatoren (2, 32) gewirkt wird, um die lineare Verschiebung des Hauptschlittens (1) und die Bewegung der Klemme (31) hervorzurufen, sodass das Schließen und/oder Öffnen der genannten Klemme (31), um ein Werkstück (P) zu greifen und/oder freizulassen, in Abhängigkeit des Durchmessers des zu transportierenden Werkstücks (P) koordiniert erzeugt wird, wobei eine Vielzahl von Greifbaugruppen (101) gesteuert werden, wobei jede Greifbaugruppe (101) mindestens einen Hauptschlitten (1) und eine assoziierte Greifvorrichtung (3) umfasst, sodass die jeweiligen Aktuatoren (2, 32), in Abhängigkeit der Bedürfnisse und/oder Anforderungen jeder Greifbaugruppe (101), unabhängig gesteuert werden.

10. Verfahren nach Anspruch 9, wobei, für die Koordination, mindestens die Geschwindigkeit der Verschiebung des Hauptschlittens (1) und der Bewegung der Klemme (31), die Beschleunigung beider Bewegungen, die Startzeit und Endzeit jeder der genannten Bewegungen und die Stellung des Hauptschlittens (1) und der Arme (311) der Klemme (31) gesteuert werden.

11. Verfahren nach Anspruch 10, wobei, um die genannte Koordination durchzuführen, zusätzlich zum Durchmesser des zu transportierenden Werkstücks (P), der Zyklus der Aktuatoren (2, 32) der Greifbaugruppe (101), der Hubweg des Hauptschlittens (1) in dessen linearen Verschiebung, die Abmessungen der Arme (311) der Klemme (31) der Greifvorrichtung (3) und der Öffnungsgrad der genannten Arme (311) berücksichtigt werden.

12. Verfahren nach Anspruch 10, wobei, um die genannte Koordination durchzuführen, ferner der Zyklus der Formgebungsmaschine berücksichtigt wird, wobei der Zyklus der Aktuatoren (2, 3) der Greifbaugruppe (101) in Abhängigkeit des Zyklus der Formgebungsmaschine und vorzugsweise des Tempos der genannten Formgebungsmaschine gesteuert wird.

13. Verfahren nach einem der Ansprüche 9 bis 12, wobei die Greifvorrichtung (3) einen Hilfsschlitten (30) umfasst, welcher am Hauptschlitten (1) in der linearen Verschiebungsrichtung (70) des Hauptschlittens (1) mit linearer Verschiebungsfreiheit befestigt ist, wobei die lineare Verschiebung des genannten Hilfsschlittens (30) in der genannten linearen Verschiebungsrichtung (70) in Bezug auf den Hauptschlitten (1) und die Verschiebung der Arme (311) in Bezug auf den genannten Hilfsschlitten (30) hervorgerufen werden, wenn die Bewegung der Greifvorrichtung (3) hervorgerufen wird.

## Revendications

1. Système de transport pour transporter des pièces à usiner dans des machines de formage, comprenant au moins un ensemble de préhension (101) comprenant un chariot principal (1) et un dispositif de préhension (3) configuré pour saisir au moins une pièce à usiner (P) et fixée au chariot principal (1), le dispositif de préhension (3) comprenant au moins une pince (31) configurée pour saisir ou libérer la pièce à usiner (P) et un actionneur de pince (32) configuré pour produire le mouvement de la pince (31) de manière que ladite pince (31) se ferme et/ou s'ouvre pour saisir et/ou libérer une pièce à usiner (P), la pince (31) comprenant deux bras opposés (311) entre lesquels la pièces à usiner (P) est saisie, l'ensemble de préhension (101) comprenant un actionneur principal (2) configurée pour produire le déplacement linéaire du chariot principal (1) dans une direction de déplacement linéaire donnée (70), à partir d'une position d'attente opposée à un poste de travail (ST) de la machine de formage audit poste de travail (ST) et vice-versa, **caractérisé en ce que** le système (100) comprend un dispositif de commande qui est configuré pour agir sur les deux actionneurs (2, 32) de l'ensemble de préhension (101) pour produire le déplacement linéaire du chariot principal (1) et le mouvement de la pince (31) de manière que ladite pince (31) s'ouvre et/ou se ferme pour saisir et/ou libérer une pièce à usiner (P) à générer d'une manière coordonnée, en fonction du diamètre de la pièce à usiner (P) à transporter, un chariot principal (1) et un dispositif de préhension associé (3) formant un ensemble de préhension (101), le système (100) comprenant une pluralité d'ensembles de préhension (101) et le dispositif de commande étant configuré pour commander les actionneurs respectifs (2, 32) de chacun dudit ensembles de préhension (101) indépendamment, en fonction des besoins et/ou des conditions de chaque ensemble de préhension (101).

2. Système de transport selon la revendication 1, dans lequel, pour générer ladite coordination, le dispositif de commande est configurée pour commander au moins la vitesse du déplacement du chariot principal (1) et du mouvement de la pince (31), l'accélération des deux mouvements, le temps de début et le temps de fin de chacun desdits mouvements, et la position du chariot principal (1) et des bras (311) de la pince (31).

3. Système de transport selon la revendication 2, dans lequel pour exécuter la coordination le dispositif de commande est configuré pour considérer, outre le diamètre de la pièce à usiner (P) à transporter, le cycle des actionneurs (2, 32) de l'ensemble de préhension (101), la course du chariot principal (1) dans son déplacement linéaire, les dimensions des bras (311) de la pince (31) du dispositif de préhension (3), et le degré d'ouverture desdits bras (311).

4. Système de transport selon la revendication 3, dans lequel pour exécuter la coordination le dispositif de commande est configuré pour considérer en outre le cycle de la machine de formage, ledit dispositif de commande étant configuré pour commander le cycle des actionneurs (2, 32) de l'ensemble de préhension (101) en fonction du cycle de la machine de formage, et de préférence le rythme de ladite machine de formage.

5. Système de transport selon l'une quelconque des revendications 1 à 4, comprenant une interface d'utilisateur communiquée avec le dispositif de commande, à travers laquelle un utilisateur peut introduire les paramètres considérés par le dispositif de commande pour exécuter la coordination, comprenant le paramètre relatif au diamètre de la pièce à usiner (P).

6. Système de transport selon l'une quelconque des revendications 1 à 5, comprenant un élément de compensation (33) fixé au corps principal (311b) d'au moins un des dits bras (311) avec une liberté de rotation, de manière à être opposé à l'autre bras (311), l'élément de compensation (33) comprenant une surface de contact essentiellement en forme de V, qui est opposée à l'autre bras (311), ledit élément de compensation (33) étant fixé au bras correspondant (311) de manière qu'il a une liberté de rotation par rapport au sommet de la surface de contact essentiellement en forme de V.

7. Système de transport selon l'une quelconque des revendications 1 à 6, dans lequel le dispositif de préhension (3) comprend un chariot auxiliaire (30) fixé au chariot principal (1) avec une liberté de déplacement linéaire, ledit déplacement linéaire étant parallèle au déplacement linéaire produit par l'actionneur principal (2), l'actionneur de pince (32) étant configuré pour produire le déplacement linéaire dudit chariot auxiliaire (30) et la pince (31) étant fixée audit chariot auxiliaire (30) avec une liberté de rotation de manière que ladite pince (31) tourne, s'ouvrant ou se fermant, lorsque le chariot auxiliaire (30) est déplacé par rapport au chariot principal (1).

8. Système de transport selon l'une quelconque des revendication 1 à 7, comprenant un châssis stationnaire (103), une plate-forme (102) fixé au châssis (103) avec une liberté de déplacement dans une direction de transport (90) transversale à la direction de déplacement linéaire (70) du chariot principal (1), et au moins un rail de guidage (111) pour chaque ensemble de préhension (101), le rail de guidage (111) étant fixé à la plate-forme (102) ou à un support (110) de l'ensemble de préhension correspondant (101), qui est fixé à ladite plate-forme (102), et ledit rail de guidage (111) s'étendant dans la direction de déplacement linéaire (70) du chariot principal (1), le chariot principal (1) d'un ensemble de préhension (101) étant associé au rail de guidage correspondant (111) de manière que ledit chariot principal (1) se déplace de manière linéaire guidé par ledit rail de guidage (111) dans la direction de déplacement linéaire (70).

9. Procédé de transport de pièces à usiner dans des machines de formage, par le biais d'un système (100) comprenant au moins un ensemble de préhension (101) avec un chariot principal (1) et un dispositif de préhension (3) configuré pour saisir une pièce à usiner (P) et fixée au chariot principal (1), le dispositif de préhension (3) comprenant au moins une pince (31) configurée pour saisir ou libérer la pièce à usiner (P) et un actionneur de pince (32) configuré pour produire le mouvement de la pince (31) de manière que ladite pince (31) se ferme et/ou s'ouvre pour saisir et/ou libérer une pièce à usiner (P), et la pince (31) comprenant deux bras opposés (311) entre lesquels la pièces à usiner (P) est saisie, et, pour transporter une pièce à usiner (P), le déplacement linéaire du chariot principal (1) est commandé dans une direction de déplacement linéaire donnée (70), à partir d'une position d'attente opposée à un poste de travail (ST) de la machine de formage audit poste de travail (ST) et/ou vice-versa, généré par un actionneur principal (2), **caractérisé en ce que** les deux actionneurs (2, 32) sont actionnés pour produire le déplacement linéaire du chariot principal (1) et le mouvement de la pince (31) de manière que ladite pince (31) se ferme et/ou s'ouvre pour saisir et/ou libérer une pièce à usiner (P) à générer d'une manière coordonnée, en fonction du diamètre de la pièce à usiner (P) à transporter, une pluralité d'ensembles de préhension (101) étant commandés, chaque ensemble de préhension (101) comprenant au moins un chariot principal (1) et un dispositif de préhension associé (3) de manière que les actionneurs respectifs (2, 32) sont commandés indépendamment, en fonction des besoins et/ou des conditions de chaque ensemble de préhension (101).

10. Procédé selon la revendication 9, dans lequel, pour la coordination, au moins la vitesse du déplacement du chariot principal (1) et du mouvement de la pince (31), l'accélération des deux mouvements, le temps de début et le temps de fin de chacun desdits mouvements, et la position du chariot principal (1) et des bras (311) de la pince (31) sont commandés.

11. Procédé selon la revendication 10, dans lequel pour exécuter la coordination, outre le diamètre de la pièce à usiner (P) à transporter, le cycle des actionneurs (2, 32) de l'ensemble de préhension (101), la course du chariot principal (1) dans son déplacement linéaire, les dimensions des bras (311) de la pince (31) du dispositif de préhension (3), et le degré d'ouverture desdits bras (311) sont considérés.

12. Procédé selon la revendication 10, dans lequel pour exécuter la coordination, le cycle de la machine de formage est considéré, le cycle des actionneurs (2, 32) de l'ensemble de préhension (101) étant commandé en fonction du cycle de la machine de formage, et de préférence le rythme de ladite machine de formage.

13. Procédé selon l'une quelconque des revendications 9 à 12, dans lequel le dispositif de préhension (3) comprend un chariot auxiliaire (30) fixé au chariot principal (1) dans la direction de déplacement linéaire (70) du chariot principal (1) avec une liberté de déplacement linéaire, le déplacement linéaire dudit chariot auxiliaire (30) dans ladite direction de déplacement linéaire (70) par rapport au chariot principal (1) et le déplacement des bras (311) par rapport audit chariot auxiliaire (30) étant produit lorsque le mouvement du dispositif de préhension (3) est produit.
